# EUROPEAN PATENT SPECIFICATION

(11) **EP 1 753 821 B1**
(45) Date of publication and mention of the grant of the patent: **03.10.2012**
(21) Application number: 05780044.3
(22) Date of filing: 02.05.2005
(51) Int. Cl.: C08L 77/00, C08K 5/00, C08K 5/5313

(54) **HALOGEN-FREE FLAME RETARDANT POLYAMIDE COMPOSITION WITH IMPROVED ELECTRICAL PROPERTIES**
HALOGENFREIE FLAMMHEMMENDE POLYAMIDZUSAMMENSETZUNG MIT VERBESSERTEN ELEKTRISCHEN EIGENSCHAFTEN
COMPOSITION DE POLYAMIDE IGNIFUGE EXEMPT D'HALOGENE PRESENTANT DES PROPRIETES ELECTRIQUES AMELIOREES

(30) Priority: 04.05.2004 US 567849 P; 12.01.2005 US 34520
(43) Date of publication of application: 21.02.2007
(73) Proprietor: SABIC Innovative Plastics IP B.V., 4612 PX Bergen op Zoom (NL)
(72) Inventor: MERCX, Franciscus Petrus Maria, NL-4611 HH Bergen op Zoom (NL); PEREGO, Carlo, Dalmine (BG) (IT); PUYENBROEK, Robert, NL-4617 JB Bergen op Zoom (NL)
(74) Representative: Strehlke, Ingo Kurt
(86) International application number: PCT/US2005/014727
(87) International publication number: WO 2005/116139

(56) References cited:
- EP-A- 1 454 948
- EP-A- 1 522 551
- WO-A-2004/022640

## Description

### CROSS-REFERENCE TO RELATED APPLICATIONS

This application claims the benefits of U.S. Provisional Patent Application Serial Number 60/567849 filed May 4, 2004 .

### BACKGROUND OF INVENTION

Polymeric materials used for electrical applications are required to meet stringent industry standards for flame retardant properties, good arc tracking resistance, while at the same time exhibiting good mechanical properties, such as tensile modulus and tensile strength. Increasingly stringent requirements also include meeting or exceeding such standards as the International Electrotechnical Commission (IEC) Glow Wire Flammability Index (GWFI) or Underwriters Laboratories, Inc. UL-94 flammability class rating.

Polyamide resins provide outstanding heat resistance and mold workability, making it useful for a variety of applications. However, polyamide shows poor flame resistance, rendering it necessary for the addition of flame-retardants to provide the desired flame retardancy demanded by the particular application. Halogenated compounds and antimony compounds can provide a method to achieve flame retardancy in polyamide compositions. However the presence of bromine and antimony limit their application in the electrical and electronics segment, as well as appliances and transportations. Brominated flame-retardants especially raise environmental concerns when the composition is burned.

Known, commercially available glass-reinforced halogen-free flame retardant polyamide materials cannot meet all the industry requirements. For instance, such materials fail to meet UL-94 V0 classification. U.S. Patent No. 6,365,071 discloses a synergistic flame protection agent combination for thermoplastic polymers, especially for polyesters, containing as component A a phosphinic acid salt, a diphosphinic acid salt, as component B a nitrogen compound including, for example, triazine based compounds, cyanurate based compounds, allantoin based compounds, glycoluril based compounds, benzoguanamine based compounds, and the like. U.S. Patent Application 2004/0021135A 1 discloses a halogen-free, flame retarder composition for use in a thermoplastic composition, in particular a glass fiber-reinforced polyamide composition, which flame retarder composition contains at least 10-90 mass percent phosphinate compound, 90-10 mass percent polyphosphate salt of a 1,3,5-triazine compound, and 0-30 mass % olefin copolymer.

There remains a need for halogen-free flame retardant polyamide compositions that exhibit good flame retardant properties, excellent arc tracking resistance properties, while at the same time retaining good mechanical properties.

### BRIEF DESCRIPTION OF THE INVENTION

The invention relates to a fiber reinforced flame-retardant polyamide composition having a combination of good flame retardant properties, good electrical performance such as arc tracking resistance, and good mechanical properties, the composition comprising a flame-retardant polyamide composition, comprising:
30 to 65 weight percent polyamide;
3 to 40 weight percent of a flame retardant system comprising
   i) a metal phosphinate or diphosphinate salt; and
   ii) at least one nitrogen compound selected from the group consisting of benzoguanine compounds, terephthalic ester compounds of tris(hydroxyalkyl)isocyanurats, allantoin compounds, glycoluril compounds, melamine cyanurate, melamine phosphate compounds, dimelamine phosphate compounds, melamine pyrophosphate compounds, melem, melam, and combinations thereof; and
35 to 70 weight percent reinforcing filler;
wherein all the amounts are based upon the total weight of the flame-retardant polyamide composition;
wherein the composition exhibits a rating of V0 according to UL-94 at 1.6 millimeters thickness, a tensile modulus of at least 10.5 GPa measured according to ISO Standard 527/1, and a comparative tracking index measured according to International Electrotechnical Commission standard IEC-60112/3^{rd} of greater than 400 Volts.

A flame-retardant polyamide composition, comprising:
30 to 65 weight percent nylon-6, nylon-6,6, or a combination thereof;
3 to 40 weight percent of a flame retardant system comprising
   i) a metal phosphinate of the formula (I) or the metal diphosphinate salt of the formula (II) 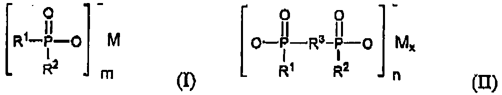 wherein R¹ and R² are each independently hydrogen, a linear or branched C₁-C₆ alkyl radical or an aryl radical; R³ is a linear or branched C₁-C₁₀ alkylene, arylene, alkylarylene, or arylalkylene radical; M is calcium, aluminum, magnesium, strontium, barium, or zinc; m is 2 or 3; n is 1 or 3; and x is 1 or 2; and
   ii) at least one nitrogen compound selected from the group consisting of benzoguanine compounds, terepthalic ester compounds of tris(hydroxyalkyl)isocyanurate, allantoin compounds, glycoluril compounds, melamine cyanurate, melamine phosphate compounds, dimelamine phosphate compounds, melamine pyrophosphate compounds, melem, melam, and combinations thereof; and
35 to 60 weight percent glass fiber and a non-reinforcing inorganic filler selected from the group consisting of calcinated clay, talc, wollastonite, barium sulfate, mica, barium titanate, salts or esters of orthosilicic acid, silicates, zeolites, silicas, glass powders, glass-ceramic powders, magnesium oxide, magnesium carbonates, zinc oxide, zinc stannate, zinc hydroxystannate, zinc phosphate, zinc borate, zinc sulfide, aluminium phosphate, metal carbonates, and combinations thereof;
wherein the glass fiber is incorporated into the flame retardant composition by a continuous melt pultrusion process so as to give the composition a tensile modulus of at least 11 GPa;
wherein all the amounts are based upon the total weight of the flame-retardant polyamide composition; and
wherein the composition exhibits a rating of V0 according to UL-94 at 1.6 millimeters thickness, and a comparative tracking index measured according to International Electrotechnical Commission standard IEC-60112/3^{rd} of greater than 400 Volts.

### DETAILED DESCRIPTION

The non-halogenated compositions provided herein comprising polyamide, a flame retardant system, and reinforcing filler have been found to exhibit excellent characteristics demanded by the industry for electrical applications.

Such electrical applications often require that the polyamide composition exhibit an arc tracking resistance (CTI) sufficient to meet class 1 or class 0, as well as good flame retardant properties, such as GWFI (Glow Wire Flammability Index) at a temperature as high as 960°C at 1.6 millimeter thickness with a burning time within 30 seconds, and/or a flammability class according to UL-94 of V0 at 1.6 millimeter thickness vertical burning test. Furthermore, the compositions also exhibit excellent mechanical properties such as a tensile strength according to ISO-527 of at least 70 MPa. In one embodiment of the composition the invention, increasing the reinforcing agent of the composition provides an unyielding electrical performance of the compound while maintaining excellent mechanical properties and impact resistance.

The terms "a" and "an" herein do not denote a limitation of quantity, but rather denote the presence of at least one of the referenced item. All ranges disclosed herein are inclusive and combinable.

The polyamide resins include a generic family of resins known as nylons, characterized by the presence of an amide group (-C(O)NH-). Nylon-6 and nylon-6,6 are suitable polyamide resins available from a variety of commercial sources. Other polyamides, however, such as nylon-4, nylon-4,6, nylon-12, nylon-6,10, nylon-6,9, nylon-6,12, nylon-9T, copolymer of nylon-6,6 and nylon-6, and others such as the amorphous nylons, may also be useful. Mixtures of various polyamides, as well as various polyamide copolymers, are also useful.

The polyamides can be obtained by a number of well-known processes such as those described in U.S. Pat. Nos. 2,071,250; 2,071,251; 2,130,523; 2,130,948; 2,241,322; 2,312,966; and 2,512,606. Nylon-6, for example, is a polymerization product of caprolactam. Nylon-6,6 is a condensation product of adipic acid and 1,6-diaminohexane. Likewise, nylon 4,6 is a condensation product between adipic acid and 1,4-diaminobutane. Besides adipic acid, other useful diacids for the preparation of nylons include azelaic acid, sebacic acid, dodecane diacid, as well as terephthalic and isophthalic acids. Other useful diamines include m-xylyene diamine, di-(4-aminophenyl)methane, di-(4-aminocyclohexyl)methane; 2,2-di- (4-aminophenyl)propane, 2,2-di-(4-aminocyclohexyl)propane, among others. Copolymers of caprolactam with diacids and diamines are also useful.

It is also to be understood that the use of the term "polyamides" herein is intended to include the toughened or super tough polyamides. Super tough polyamides, or super tough nylons as commonly known, e.g. as available from E.I. duPont under the trade name ZYTEL ST, or those prepared in accordance with U.S. Pat. No. 4,174,358; U.S. Pat. No. 4,474, 927; U.S. Pat. No.4,346,194; and U.S. Pat. No. 4,251,644, among others and combinations comprising at least one of the foregoing, can be employed.

Generally, these super tough nylons are prepared by blending one or more polyamides with one or more polymeric or copolymeric elastomeric toughening agents. Suitable toughening agents are disclosed in the above-identified U.S. Patents as well as in U.S. Pat. No. 3,884,882 to Caywood, Jr., U.S. Pat. No. 4,147,740 to Swiger et al.; and "Preparation and Reactions of Epoxy-Modified Polyethylene", J. Appl. Poly. Sci., V 27, pp. 425-437 (1982). Typically, these elastomeric polymers and copolymers may be straight chain or branched as well as graft polymers and copolymers, including core-shell graft copolymers, and are characterized as having incorporated therein either by copolymerization or by grafting on the preformed polymer, a monomer having functional and/or active or highly polar groupings capable of interacting with or adhering to the polyamide matrix so as to enhance the toughness of the polyamide polymer.

Polyamide is present in the composition in an amount of 30 to 65 weight percent 35 to preferably 60 weight percent. In a embodiment, 40 to 55 weight percent based on the total weight of the composition.

In one embodiment, the composition optional includes in a ratio of 2:1 or lower of a polyarylene ether in combination with the polyamide resin. As used herein, polyarylene ether includes polyphenylene ether (PPE), polyarylene ether ionomers, polyarylene ether copolymers, polyarylene ether graft copolymers, block copolymers of polyarylene ethers with alkenyl aromatic compounds or vinyl aromatic compounds, ;and combinations comprising at least one of the foregoing polyarylene ethers. Partially crosslinked polyarylene ethers, as well as mixtures of branched and linear polyarylene ethers may also be used in the high temperature compositions. The polyarylene ethers comprise a plurality of structural units of the formula (I): 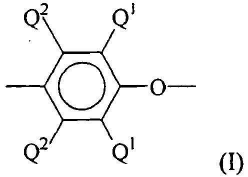 wherein for each structural unit, each Q¹ and Q² are independently a halogen, a primary or secondary lower alkyl (e.g., an alkyl containing up to 7 carbon atoms), a phenyl, a haloalkyl, an aminoalkyl, a hydrocarbonoxy, a halohydrocarbonoxy wherein at least two carbon atoms separate the halogen and oxygen atoms . It is desirable for each Q¹ to be an alkyl or a phenyl. In one embodiment, it is desirable for the alkyl group to have from 1 to 4 carbon atoms and for each Q² to be hydrogen.

The polyarylene ethers may be either homopolymers or copolymers. The homopolymers are those containing 2,6-dimethylphenylene ether units. Suitable copolymers include random copolymers containing, for example, such units in combination with 2,3,6-trimethyl-1,4-phenylene ether units or alternatively, copolymers derived from copolymerization of 2,6-dimethylphenol with 2,3,6-trimethylphenol. Also included are polyarylene ethers containing moieties prepared by grafting vinyl monomers or polymers such as polystyrenes, as well as coupled polyarylene ethers in which coupling agents such as low molecular weight polycarbonates, quinones, heterocycles, and formals undergo reaction with the hydroxy groups of two polyarylene ether chains to produce a higher molecular weight polymer. Suitable polyarylene ethers further include combinations comprising at least one of the above homopolymers or copolymers.

When the composition comprises polyamide and poly(arylene ether) the composition may optionally further comprise a compatibilizing agent to improve the physical properties of the poly(arylene ether)-polyamide resin blend, as well as to enable the use of a greater proportion of the polyamide component. When used herein, the expression "compatibilizing agent" refers to those polyfunctional compounds which interact with the poly(arylene ether), the polyamide, or, preferably, both. This interaction may be chemical (e.g. grafting) or physical (e.g. affecting the surface characteristics of the dispersed phases). In either case the resulting poly(arylene ether)-polyamide composition appears to exhibit improved compatibility, particularly as evidenced by enhanced impact strength, mold knit line strength and/or elongation. As used herein, the expression "compatibilized poly(arylene ether)-polyamide base resin" refers to those compositions which have been physically or chemically compatibilized with an agent as discussed above, as well as those compositions which are physically compatible without such agents, as taught, for example, in U.S. Patent No. 3,379,792.

Suitable compatibilizing agents include, for example, liquid diene polymers, epoxy compounds, oxidized polyolefin wax, quinones, organosilane compounds, polyfunctional compounds, and functionalized polyphenylene ethers obtained by reacting one or more of the previously mentioned compatibilizing agents with polyphenylene ether.

The above and other compatibilizing agents are more fully described in U.S. Patent Nos. 4,315,086; 4,600,741; 4,642,358; 4,826,933; 4,866,114; 4,927,894; 4,980,424; 5,041,504; and 5,115,042. The foregoing compatibilizing agents may be used alone or in various combinations of one another with another. Furthermore, they may be added directly to the melt blend or pre-reacted with either or both the polyphenylene ether and polyamide, as well as with other resinous materials employed in the preparation of the compositions of the present invention.

Where the compatibilizing agent is employed in the preparation of the compositions of the present invention, the initial amount used will be dependent upon the specific compatibilizing agent chosen and the specific polymeric system to which it is added. Generally, when present, the compatibilizing agent may be present in an amount of 0.01 weight percent to 25 weight percent, more specifically 0.4 to 10 weight percent, and more specifically 1 to 3 weight percent, based on the total weight of the composition.

The composition further comprises a flame retardant system, wherein the flame retardant system comprises phosphinates and/or diphosphinates. Suitable phosphinates and phosphinates include, for example a) a phosphinate of the formula (I), a diphosphinate of the formula (II), polymers of the foregoing, or a combination thereof 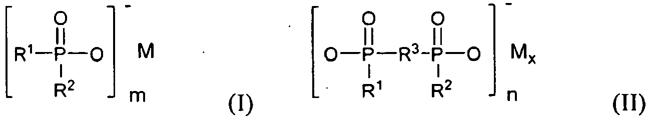 wherein R¹ and R² are each independently hydrogen, a linear or branched C₁-C₆ alkyl radical, or aryl radical; R³ is a linear or branched C₁-C₁₀ alkylene, arylene, alkylarylene, or arylalkylene radical; M is calcium, aluminum, magnesium, strontium, barium, or zinc; m is 2 or 3; n is 1 or 3; and x is 1 or 2; and b) at least one nitrogen compound selected from the group consisting of benzoguanine compounds, terepthalic ester compounds of tris(hydroxyalkyl)isocyanurate, allantoin compounds, glycoluril compounds, melamine cyanurate, melamine phosphate compounds, dimelamine phosphate compounds, melamine pyrophosphate compounds, melem, melam, melon, ammeline, ammelide, and combinations thereof.

"Phosphinic salt" as used herein includes salts of phosphinic and diphosphinic acids and polymers thereof. Exemplary phosphinic acids as a constituent of the phosphinic salts include dimethylphosphinic acid, ethylmethylphosphinic acid, diethylphosphinic acid, methyl-n-propylphosphinic acid, methanedi(methylphosphinic acid), benzene-1,4-(dimethylphosphinic acid), methylphenylphosphinic acid and diphenylphosphinic acid. The salts of the phosphinic acids used in the invention can be prepared by known methods that are described in U.S. Patent Nos. 5,780,534 and 6,013,707.

Suitable nitrogen compounds include compounds of formula (III) to (VIII) or a combination thereof 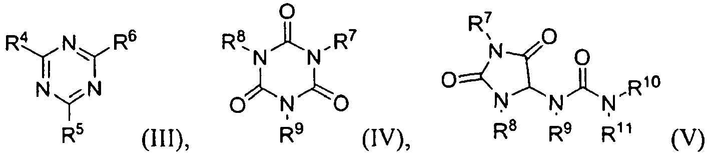 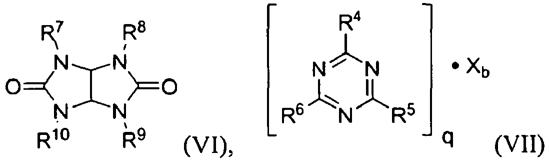 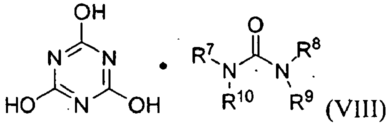 wherein R⁴, R⁵, and R⁶ are independently hydrogen, hydroxy, amino, or mono- or diC₁-C₈alkyl amino; or C₁-C₈alkyl, C₅-C₁₆cycloalkyl, -alkylcycloalkyl, wherein each may be substituted by a hydroxyl or a C₁-C₄hydroxyalkyl, C₂-C ₈alkenyl, C₁-C₈alkoxy, -acyl, -acyloxy, C₆-C₁₂aryl, -OR⁴ and -N(R⁴)R⁵; or are N-alicyclic or N-aromatic, where N-alicyclic denotes cyclic nitrogen containing compounds such as pyrrolidine, piperidine, imidazolidine, piperazine and N-aromatic denotes nitrogen containing heteroaromatic ring compounds such as pyrrole, pyridine, imidazole, pyrazine R⁷, R⁸, R⁹, R¹⁰ and R¹¹ are independently hydrogen, C₁-C₈alkyl, C₅-C₁₆cycloalkyl or -alkyl(cycloalkyl), each may be substituted by a hydroxyl or a C₁-C₄hydroxyalkyl, C₂-C₈alkenyl, C₁-C₈alkoxy, -acyl, -acyloxy, C₆-C₁₂aryl, and -O-R⁴; X is phosphoric acid or pyrophosphoric acid; q is 1, 2, 3, or 4; and b is 1, 2, 3, or 4.

The composition may further comprise an impact modifier. Exemplary impact modifiers include styrene block copolymers including styrene-butadiene-styrene copolymer (SBS), styrene-(ethylene-butene)-styrene (SEBS), styrene butadiene rubbers (SBR), acrylonitrile-butadiene-styrene copolymers (ABS), styrene-maleic anhydride (SMA) copolymers, alkyl methacrylate styrene acrylonitrile (AMSAN), methylmethacrylate-butadiene-styrene (MBS), combinations comprising at least one of the foregoing impact modifiers. Other suitable impact modifiers include styrene-(ethylene-propylene)-styrene (SEPS), styrene-(ethylene-butene) (SEB), styrene-(ethylene-propylene) (SEP), styrene-isoprene-styrene (SIS), styrene-isoprene, styrene-butadiene, α-methylstyrene-isoprene-a-methylstyrene, α-methylstyrene-butadiene-α-methylstyrene, as well as hydrogenated versions. The styrene block copolymers may be the linear or radial type, and the di-block or triblock type. Still other suitable impact modifiers include thermoplastic elastomers (TPE).

The amount of impact modifier present in the composition may be up to 15 weight percent. In one embodiment, 3 to 10 weight percent. In another embodiment, 3 to 7 weight percent based on the total weight of the composition.

The composition further comprises reinforcing filler including fibrous reinforcing filler. The fibrous filler may be any conventional filler used in polymeric resins and having an aspect ratio greater than 1. Such fillers may exist in the form of whiskers, needles, rods, tubes, strands, elongated platelets, lamellar platelets, ellipsoids, micro fibers, nanofibers and nanotubes, elongated fullerenes. Where such fillers exist in aggregate form, an aggregate having an aspect ratio greater than 1 will also suffice for the fibrous filler.

Suitable fibrous fillers include, for example, glass fibers, such as E, A, C, ECR, R, S, D, and NE glasses and quartz may be used as the reinforcing filler. Other suitable inorganic fibrous fillers include those derived from blends comprising at least one of aluminum silicates, aluminum oxides, magnesium oxides, and calcium sulfate hemihydrate. Also included among fibrous fillers are single crystal fibers or "whiskers" including silicon carbide, alumina, boron carbide, iron, nickel, or copper. Other suitable inorganic fibrous fillers include carbon fibers, stainless steel fibers, metal coated fibers.

In addition, organic reinforcing fibrous fillers may also be used including organic polymers capable of forming fibers. Illustrative examples of such organic fibrous fillers include poly(ether ketone), polyimide, polybenzoxazole, poly(phenylene sulfide), polyesters, aromatic polyamides including aramid, aromatic polyimides or polyetherimides, polytetrafluoroethylene, acrylic resins, and poly(vinyl alcohol). Such reinforcing fillers may be provided in the form of monofilament or multifilament fibers and can be used either alone or in combination with other types of fiber, through, for example, co-weaving or core/sheath, side-by-side, orange-type or matrix and fibril constructions, or by other methods known to one skilled in the art of fiber manufacture.

The composition may further comprise an inorganic filler in addition to the reinforcing filler. Such inorganic filler includes low aspect ratio inorganic filler. Examples of such fillers well known to the art include those described in "Plastic Additives Handbook, 4th Edition" R. Gachter and H. Muller (eds.), P.P. Klemchuck (assoc. ed.) Hansen Publishers, New York 1993.

Non-limiting examples of low aspect inorganic fillers include silica powder, such as fused silica, crystalline silica, natural silica sand, and various silane-coated silicas; boron-nitride powder and boron-silicate powders; alkaline earth metal salts; alumina and magnesium oxide (or magnesia); wollastonite, including surface-treated wollastonite; calcium sulfate (as, for example, its anhydride, dihydrate or trihydrate); calcium carbonates; other metal carbonates, for example magnesium carbonate, beryllium carbonate, strontium carbonate, barium carbonate, and radium carbonate; talc; glass powders; glass-ceramic powders; clay including calcined clay, for example kaolin, including hard, soft, calcined kaolin; mica; feldspar and nepheline syenite; salts or esters of orthosilicic acid and condensation products thereof; silicates; zeolites; quartz; quartzite; perlite; diatomaceous earth; silicon carbide; zinc sulfide; zinc oxide; zinc stannate; zinc hydroxystannate; zinc phosphate; zinc borate; aluminum phosphate; barium titanate; barium ferrite; barium sulfate and heavy spar; particulate aluminum, bronze, zinc, copper and nickel; carbon black, including conductive carbon black; flaked fillers such as glass flakes, flaked silicon carbide, aluminum diboride, aluminum flakes, and steel flakes.

The total amount of filler present in the composition may be 30 to 60 weight percent, more specifically 35 to 55 weight percent, or even more specifically 40 to 50 weight percent based on the total weight of the composition. In one embodiment, the ratio of reinforcing filler to non-reinforcing inorganic mineral filler is greater than 1, especially greater than about 1.2, and more especially greater than about 1.5.

The composition may further comprise other additives known in the art. Suitable additives include wear additives, for example, polytetrafluoroethylene (PTFE), molybdenum disulfide (MoS₂), graphite, combinations comprising at least one of the foregoing wear additives.

Other customary additives may be added to all of the resin compositions at the time of mixing or molding of the resin in amounts as necessary which do not have any deleterious effect on physical, flame retardant, and/or electrical properties. For example, coloring agents (pigments or dyes), heat-resistant agents, oxidation inhibitors, organic fibrous fillers, weatherproofing agents, lubricants, mold release agents, plasticizer, and fluidity enhancing agents , may be added.

It should be clear that the invention encompasses reaction products of the above described compositions.

The preparation of the compositions may be achieved by blending the ingredients under conditions for the formation of an intimate blend. All of the ingredients may be added initially to the processing system, or else certain additives may be precompounded with the polyamide. The blend may be formed by mixing in single or twin screw type extruders or similar mixing devices which can apply a shear to the components. In another embodiment, long fibers may be blended into the master batch at the injection molding machine.

In one embodiment, separate extruders are used in the processing of the blend. In another embodiment, the composition is prepared by using a single extruder having multiple feed ports along its length to accommodate the addition of the various components. A vacuum may be applied to the melt through at least one or more vent ports in the extruder to remove volatile impurities in the composition.

In one embodiment polyamide resin is first blended with the flame retardant system and reinforcing filler, such as chopped glass strands, in a Henschel high speed mixer. Other low shear processes including but not limited to hand mixing may also accomplish this blending. The blend is then fed into the throat of a twin-screw extruder via a hopper. Alternately the glass may be incorporated into the composition by feeding unchopped strands directly into the extruder. The dispersed glass fibers are reduced in length as a result of the shearing action on the glass strands in the extruder barrel.

In another embodiment, the reinforcing filler, e.g., glass fiber, carbon fiber, aramid is not blended in with the polyamide and flame retardant system, but it is incorporated into the flame-retardant polyamide composition by a process known as pultrusion, which process is described in a number of references, for example, US Patent Nos. 3,993,726 and 5,213,889. In the pultrusion process, a tow or roving of fibers is pulled through a bath of molten polymer to impregnate the fiber. The impregnated fiber product may be pulled through a means for consolidating the product such as a sizing die. In one embodiment, the impregnated product may be wound on rolls for subsequent use in fabrication processes requiring a continuous product. In yet another embodiment, the fiber impregnated by the composition of the invention may be chopped into pellets or granules, in which the aligned fibers have lengths from 2 mm up to 100 mm. These may be used in conventional moulding or extrusion processes for forming articles.

The compositions of the invention may be converted to articles using common thermoplastic processes such as film and sheet extrusion, injection molding, gas-assisted injection molding, extrusion molding, compression molding and blow molding. Film and sheet extrusion processes may include and are not limited to melt casting, blown film extrusion, and calendaring. Co-extrusion and lamination processes may be employed to form composite multi-layer films or sheets. Single or multiple layers of coatings may further be applied to the single or multi-layer substrates to impart additional properties such as scratch resistance, ultra violet light resistance, aesthetic appeal. Coatings may be applied through standard application techniques such as rolling, spraying, dipping, brushing, or flow-coating.

Film and sheet of the invention may alternatively be prepared by casting a solution or suspension of the composition in a suitable solvent onto a substrate, belt or roll followed by removal of the solvent. In another embodiment, the compositions are used to prepare molded articles such as for example, durable articles, structural products, and electrical and electronic components.

In one embodiment, the compositions prepared into 1.6 millimeter (mm) test specimens, exhibit a flammability class rating according to UL-94 of at least V2, more specifically at least V1, and yet more specifically at least V0.

In yet another embodiment, the composition exhibits a comparative tracking index (CTI) measured according to International Electrotechnical Commission (IEC) standard lEC-60112/3^{rd} using a test specimen having a thickness of 4.0 mm and a diameter of a minimum of 60.0 mm of greater than 400 Volts, specifically greater than 500 Volts, yet more specifically greater than 550 Volts, and still yet more specifically greater than 600 Volts.

The compositions described herein have been found to exhibit a Glow Wire Flammability Index (GWFI) as measured according to IEC-60695-2-12 of 960°C at a test specimen thickness of at least 2.0 mm.

In yet another embodiment, the compositions described herein, when formed into test specimens having a thickness of 4.0 millimeters exhibit a tensile modulus of at least about 9.5 Giga Pascal (GPa), more specifically at least about 10.5, and a tensile strength of at least about 70 Mega Pascal (MPa), more specifically at least about 100 MPa, and yet more specifically at least about 125 MPa as measured by ISO Standard 527/1. In one embodiment wherein the composition is prepared via a pultrusion process, test specimens having a thickness of 4.0 millimeters exhibit a tensile modulus of at least about 11 Giga Pascal (GPa), more specifically at least about 12 GPa, and yet in another embodiment, at least 14 GPa.

The invention is further illustrated by the following non-limiting examples.

EXAMPLES The formulations for the following Examples were prepared from the components listed in Table 1 below.

**Table 1.**

| Component | Trade Name | Description |
|---|---|---|
| PA 6 2,4RV | Radipol A24S | Polyamide-6 |
| PA 66 2,4RV | Radipol A40D | Polyamide-66 |
| Glass fiber | DS1103-10P | Chopped Glass Fiber |
| Melamine cyanurate | Melapur MC25 | Flame retardant |
| Melamine phosphate | Melapur 200/70 | Flame retardant |
| Brominated PS | Pyrocheck 68PB | Brominated polystyrene flame retardant |
| Antimony trioxide | | Flame retardant synergist |
| RDP | Fyroflex RDP | Resorcinol bisdiphenylphosphate |
| Component A | Exolit OP 1312 | Flame retardant system containing a metal phosphinate and a nitrogen compound available from Clariant |
| Zinc borate | | Flame retardant synergist |
| DHT-4A | | Acid scavenger, hydrotalcite-like compound |
| AO1 | lrganox 1098 | Anti-oxidant |
| AO2 | lrgafos 168 | Anti-oxidant |
| Mold release | | Aluminum stearate |
| Long Glass fiber | PPG4588 | Roving Glass Fiber |
| Flow promoter | Acrowax C Allied AC-540 | Stearates |

The components were compounded in a corotating twin-screw extruder (Wemer & Pfleiderer, type ZSK40), using a screw design having a mid range screw severity, at a melt temperature of 270 to 300°C, and at rates of 45 to 100 kilograms per hour. The resulting resin mixtures were then molded into bars using typical injection molding machines, ranging from laboratory-sized machines to commercial sized machines. Melt temperatures were about 270-300°C, and mold temperature were about 50-120°C. The molded bars were then tested according to the tests below.

Flammability tests were performed following the procedure of Underwriters Laboratories Inc., Bulletin 94 entitled "Tests for Flammability of Plastic Materials for Parts in Devices and Appliances, UL94" of a 0.8mm and 1.6mm test piece in the vertical position. According to this procedure, the materials were classified as V-0, V-1, or V-2 on the basis of the test results.

The tensile modulus and strength were measured by ISO Standard 527/1 using a test piece having a thickness of 4.0mm. The units of tensile modulus is provided in Giga Pascal (GPa) and the units of tensile strength are provided in Mega Pascal (MPa).

The Izod notched impact was measured according to ISO 180-1 A and the results are provided in units of Kilo Joules per squared meter (KJ/m²).

The comparative tracking index (CTI) was measured according to International Electrotechnical Commission (IEC) standard IEC-60112/3^{rd} using a specimen having a thickness of 4.0mm and a diameter of minimum of 60.0mm. A tracking index of 400 to 599 Volts corresponds to class 1, and 600 Volts and greater is class 0.

The Glow Wire Flammability Index (GWFI) was measured according to IEC-60695-2-12 using a specimen having a thickness of 1.0 to 1.6mm and a dimension of 60.0 by 60.0mm.

Table 2 contains the results of glass fiber filled polyamide compositions containing known flame retardants melamine cyanurate, melamine phosphate, or brominated polystyrene and antimony trioxide, but no phosphinic salts. N.C. stands for not classified.

**Table 2.**

| Components | CE 1 | CE 2 | CE 3 | CE 4 | CE 5 | CE 6 | CE 7 | CE 8 |
|---|---|---|---|---|---|---|---|---|
| PA 6 2,4RV | 43.50 | 37.50 | 67.40 | 64.40 | 60.40 | 27.20 | 24.70 | 22.20 |
| PA66 2,4RV | - | - | - | - | - | 27.20 | 24.70 | 22.20 |
| Glass Fiber | 25.00 | 35.00 | 25.00 | 25.00 | 25.00 | 25.00 | 25.00 | 35.00 |
| Melamine Cyanurate | - | - | 7.00 | 10.00 | 14.00 | - | - | - |
| Melamine Phosphate | - | - | - | - | - | 20.00 | 25.00 | 20.00 |
| Brominated polystyrene | 21.00 | 18.00 | - | - | - | - | - | - |
| Antimony trioxide | 7.00 | 6.00 | - | - | - | - | - | - |
| Zinc Borate | 2.50 | 2.50 | - | - | - | - | - | - |
| DHT-4A | 0.40 | 0.40 | - | - | - | - | - | - |
| AO1 | 0.20 | 0.20 | 0.20 | 0.20 | 0.20 | 0.20 | 0.20 | 0.20 |
| AO2 | 0.15 | 0.15 | 0.15 | 0.15 | 0.15 | 0.15 | 0.15 | 0.15 |
| Mold Release | 0.25 | 0.25 | 0.25 | 0.25 | 0.25 | 0.25 | 0.25 | 0.25 |

| Properties | | | | | | | | |
|---|---|---|---|---|---|---|---|---|
| Tensile Modulus (GPa) | 9.0 | 10.5 | 5.4 | 5.6 | 6.0 | 9.50 | 10.00 | 12.50 |
| Tensile Strength (MPa) | 130 | 160 | 78.0 | 75.0 | 74.0 | 150.0 0 | 145.00 | 165.00 |
| Izod notched impact (KJ/m²) | 6 | 7.5 | 3.0 | 2.8 | 2.5 | 5.50 | 6.00 | 6.50 |
| CTI (volts) | 375 | 400 | 475 | 450 | 425 | 300 | 325 | 300 |
| GWFI 960°C @ 1.0mm | pass | pass | pass | pass | pass | pass | pass | Pass |
| UL class @ 0.8mm | vo | V0 | V2 | V2 | V2 | n.c. | V2 | n.c. |
| UL class @ 1.6mm | V0 | vo | V2 | V2 | V2 | n.c. | vo | n.c. |

As illustrated in the Table 2, Comparative Examples (CE) 1 and 2 showed that halogenated glass-reinforced polyamide compounds did not meet the requirement of CTI (minimum 450 Volts). Comparative Examples 3 to 5 showed that glass-reinforced polyamide compositions with melamine cyanurate did not meet the UL 94 V0 rating. Finally, Comparative Examples 6 to 8 directed to glass-reinforced polyamide compositions containing melamine phosphate gave inferior CTI performance.

Table 3 contains the results of glass fiber filled polyamide compositions containing known flame retardants melamine cyanurate or resorcinol bisdiphenylphosphate, but no phosphinic salts.

**Table 3.**

| Components | CE 9 | CE 10 | CE 11 | CE 4 | CE 13 | CE 14 | CE 15 | CE 16 |
|---|---|---|---|---|---|---|---|---|
| PA 6 2,4RV | 59.40 | 44.40 | 49.40 | 64.40 | 59.40 | 54.40 | 49.40 | 52.40 |
| Glass Fiber | 25.00 | 40.00 | 40.00 | 25.00 | 30.00 | 35.00 | 40.00 | 40.00 |
| Melamine Cyanurate | - | - | - | 10.00 | 10.00 | 10.00 | 10.00 | 7.00 |
| RDP | 15.00 | 15.00 | 10.00 | - | - | - | - | |
| AO1 | 0.20 | 0.20 | 0.20 | 0.20 | 0.20 | 0.20 | 0.20 | 0.20 |
| AO2 | 0.15 | 0.15 | 0.15 | 0.15 | 0.15 | 0.15 | 0.15 | 0.15 |
| Mold release | 0.25 | 0.25 | 0.25 | 0.25 | 0.25 | 0.25 | 0.25 | 0.25 |

| Properties | | | | | | | | |
|---|---|---|---|---|---|---|---|---|
| Tensile Modulus (GPa) | - | - | - | 5.6 | 6.7 | 7.7 | 8.2 | 8.1 |
| Tensile Strength (MPa) | - | - | - | 75.0 | 78.0 | 82.0 | 85.0 | 88.0 |
| Izod notched impact (KJ/m²) | - | - | - | 2.8 | 3.2 | 3.5 | 3.9 | 4.2 |
| CTI (volts) | 450 | 425 | 525 | 450 | 475 | 475 | 475 | 475 |
| GWFI 960°C @ 1.0mm | pass | pass | pass | pass | pass | pass | pass | pass |
| UL class @ 0.8mm | V2 | V2 | V2 | V2 | V2 | V2 | V2 | V2 |
| UL class @ 1.6mm | V2 | V2 | V2 | V2 | V2 | V2 | V2 | V2 |

As illustrated in the Table 3, Comparative Examples 9 to 11 are based on organic phosphorous compound which did not meet the UL 94 V0 rating. Comparative Examples 13 to 16 showed that compounds with melamine cyanurate at varying glass loadings also failed to meet the UL 94 V0 rating.

Table 4 illustrates Examples 17 to 25 compositions that contain a flame retardant system of a metal phosphinate or diphosphinate and a nitrogen compound (Component A).

**Table 4.**

| Components | CE 17 | CE 18 | 19 | 20 | CE 21 | CE 22 | CE 23 | CE 24 | CE 25 |
|---|---|---|---|---|---|---|---|---|---|
| PA 6 2,4RV | 34.70 | 29.70 | 24.70 | 19.70 | 35.95 | 34.70 | 32.20 | 28.45 | 27.20 |
| PA66 2,4RV | 34.70 | 29.70 | 24.70 | 19.70 | 35.95 | 34.70 | 32.20 | 28.45 | 27.20 |
| Glass Fiber | 15.00 | 25.00 | 35.00 | 45.00 | 25.00 | 25.00 | 25.00 | 25.00 | 25.00 |
| Component A | 15.00 | 15.00 | 15.00 | 15.00 | 2.50 | 5.00 | 10.00 | 17.50 | 20.00 |
| AO1 | 0.20 | 0.20 | 0.20 | 0.20 | 0.20 | 0.20 | 0.20 | 0.20 | 0.20 |
| AO2 | 0.15 | 0.15 | 0.15 | 0.15 | 0.15 | 0.15 | 0.15 | 0.15 | 0.15 |
| Mold release | 0.25 | 0.25 | 0.25 | 0.25 | 0.25 | 0.25 | 0.25 | 0.25 | 0.25 |

| Properties | | | | | | | | | |
|---|---|---|---|---|---|---|---|---|---|
| Tensile Modulus (GPa) | 6.8 | 9.4 | 12.2 | 14.1 | 8.9 | 8.4 | 8.9 | 9.5 | 9.7 |
| Tensile Strength (MPa) | 112.0 | 140.0 | 166.5 | 189.3 | 161.2 | 153.5 | 155.0 | 138.0 | 125.0 |
| Izod notched impact (KJ/m²) | 7.4 | 9.5 | 11.2 | 12.4 | 8.7 | 9.2 | 8.6 | 9.0 | 7.5 |
| CTI (volts) | 600 | 600 | 600 | 600 | 600 | 600 | 600 | 600 | 600 |
| GWFI 960°C @ 1.0mm | pass | pass | pass | pass | fail | pass | pass | pass | pass |
| UL class @ 0.8mm | V2 | V2 | vo | vo | V2 | V2 | V2 | V0 | V0 |
| UL class @ 1.6mm | V0 | V0 | V0 | vo | V2 | V2 | n.c. | vo | V0 |

In Table 4, Examples 17 to 20 illustrates an increase in mechanical properties with the increase of glass loading without compromising electrical and flammability performance. Examples 21 to 25 showed that 17.5 % of the flame retardant system in combination with the presence of 25% glass fiber results in a composition that meets industry requirements for UL94 (V0), CTI (minimum 450 volts), and GWFI (pass) while at the same time retaining excellent mechanical properties of tensile modulus and strength.

**Table 5.**

| Components | 26 | CE 27 | CE 28 | CE 29 | 30 |
|---|---|---|---|---|---|
| PA 6 2,4RV | 49.40 | 63.10 | 53.10 | 47.65 | 32.65 |
| PA66 2,4RV | | | | | |
| Glass fiber | 35.00 | | | | |
| Long Glass fiber | | 35.00 | 35.00 | 50.00 | 50.00 |
| Component A | 15.00 | | 10.00 | | 15.00 |
| flow promotors | | 1.55 | 1.55 | 2.00 | 2.00 |
| AO1 | 0.20 | 0.20 | 0.20 | 0.20 | 0.20 |
| AO2 | 0.15 | 0.15 | 0.15 | 0.15 | 0.15 |
| Mold release | 0.25 | | | | |

| Properties | | | | | |
|---|---|---|---|---|---|
| Tensile Modulus (GPa) | 11.5 | 12.5 | 11.1 | 16.9 | 16.0 |
| Izod notched impact (KJ/m2) | 11.2 | 39.0 | 27.2 | 45.0 | 41.1 |
| CTI (volts) | 600 | 450 | 450 | 475 | 500 |
| GWFI 960C @1.0mm | pass | pass | pass | pass | pass |
| UL class @0.8mm | vo | n/a | n/a | n/a | n/a |
| UL class @1.6mm | vo | HB | VI | HB | vo |
| UL class @3.2mm | vo | HB | VI | HB | vo |
| GWIT775C 3mm | fail | fail | 775 | fail | 775 |

In Table 5, examples 26 to 30 illustrate a comparison of materials produced with different compounding processes. Example 26 is a reference material compounded using the traditional co-rotating twin-screw extrusion process. Examples 27 to 30 were compounded using a pultrusion process. Examples 27 and 29 are without flame retardant agent, while examples 28 and 30 contain flame retardant composition. Examples 27 to 30 show exceptional mechanical properties with the composition of the invention, as formed using the pultrusion process. Additionally, examples 28 and 30 with the continuous distribution of the long glass fiber as formed via the pultrusion process, and which acts as a matrix in the molded parts, demonstrate a flammability and electrical performance that meets or exceeds the industry requirements, such as GWIT775C at 3.0mm (examples 28 and 30).

## Claims

1. A flame-retardant polyamide composition, comprising:
30 to 65 weight percent polyamide;
3 to 40 weight percent of a flame retardant system comprising
i) a metal phosphinate or diphosphinate salt; and
ii) at least one nitrogen compound selected from the group consisting of benzoguanine compounds, terephthalic ester compounds of tria(hydroxyalkyl)isocyanurate, allantoin compounds, glycoluril compounds, melamine cyanurate, melamine phosphate compounds, dimelamine phosphate compounds, melamine pyrophosphate compounds, melem, melam, and combinations thereof; and
35 to 70 weight percent reinforcing filler;
wherein all the amounts are based upon the total weight of the flame-retardant polyamide composition;
wherein the composition exhibits a rating of V0 according to UL-94 at 1.6 millimeters thickness, a tensile modulus of at least 10.5 GPa measured according to ISO Standard 527/1, and a comparative tracking index measured according to International Electrotechnical Commission standard IEC-60112/3^{rd} of greater than 400 Volts.

2. The composition of claim 1, wherein the metal phosphinate salt is of the formula (I) and the metal diphosphinate salt is of the formula (II) 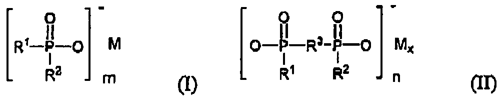 wherein R¹ and R² are each independently hydrogen, a linear or branched C₁-C₆ alkyl, radical, or aryl radical; R³ is a linear or branched C₁-C₁₀ alkylene, arylene, alkylarylene, or arylalkylene radical; M is calcium, aluminum, magnesium, strontium, barium, or zinc; m is 2 or 3; n is 1 or 3; and x is 1 or 2.

3. The composition of claim I, wherein the nitrogen compound comprises a compound of the formula (III) to (VIII) or combinations thereof 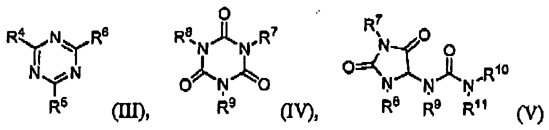 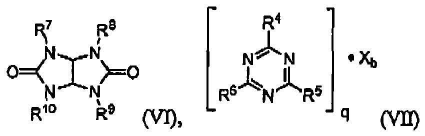 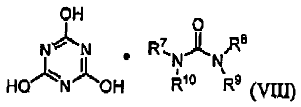 wherein R⁴, R⁵, and R⁶ are independently hydrogen, hydroxy, amino, mono- or di C₁-C₈ alkyl amino; C₁-C₈ alkyl, C₅-C₁₆ cycloalkyl, or alkylcycloalkyl, wherein each may be substituted by a hydroxyl or a C₁-C₄ hydroxyalkyl, C₂-C₈ alkenyl, C₁-C₈ alkoxy, -acyl, - acyloxy, C₆-C₁₂ aryl, -OR⁴ and -N(R⁴)R⁵; or are N-alicyclic or N-aromatic, where N-alicyclic denotes cyclic nitrogen containing compounds such as pyrrolidine, piperidine, imidazolidine, or piperazine, and N-aromatic denotes nitrogen containing heteroaromatic ring compounds; the nitrogen containing heteroaromatic ring compounds such as pyrrole, pyridine, imidazole, or pyrazine; R⁷, R⁸, R⁹, R¹⁰ and R¹¹ are independently hydrogen, C₁-C₈ alkyl, C₅-C₁₆ cycloalkyl or -alkylcycloalkyl, each may be substituted by a hydroaxyl or a C₁-C₄ hydroxyalkyl, C₂-C₈ alkenyl, C₁-C₈ alkoxy, -acyl, -acyloxy, C₆-C₁₂ aryl, and -OR⁴; X is phosphoric acid or pyrophosphoric acid; q is 1, 2, 3, or 4; and b is 1, 2, 3, or 4.

4. The composition of claim 1, wherein the polyamide is selected from the group consisting of nylon-6, nylon-6,6, nylon-4, nylon-4,6, nylon-12, nylon-6,10, nylon-6,9, nylon-6,12, nylon-9T, copolymer of nylon-6,6 and nylon-6, polyamide copolymers, and combinations thereof.

5. The composition of claim 1, comprising a non-reinforcing inorganic filler, wherein the ratio of reinforcing filler to non-reinforcing inorganic filler is greater than 1, and wherein the total amount of reinforcing filler and non-reinforcing filler present in the composition is 35 to 70% by weight.

6. The composition of claim 5, wherein the non-reinforcing inorganic filler is selected from the group consisting of calcinated clay, talc, wollastonite, barium sulfate, mica, barium titanate, salts or esters of orthosilicic acid, silicates, zeolites, silicas, glass powders, glass-ceramic powders, magnesium oxide, magnesium carbonates, zinc oxide, zinc stannate, zinc hydroxystannate, zinc phosphate, zinc borate, zinc sulfide, aluminium phosphate, metal carbonates, and combinations thereof.

7. The composition of claim 1 further comprising up to 15 weight percent of an impact modifier.

8. The composition of claim 1, further comprising up to 20 weight percent of a wear additive based on the total weight of the composition, wherein the wear additive is selected from the group consisting of polytetrafluoroethylene, molybdenum disulfide, graphite, aramid, carbon fiber, carbon powder, and combinations thereof.

9. A flame-retardant polyamide composition, comprising:
30 to 65 weight percent nylon-6, nylon-6,6, or a combination thereof;
3 to 40 weight percent of a flame retardant system comprising
i) a metal phosphinate of the formula (I) or the metal diphosphinate salt of the formula (II) 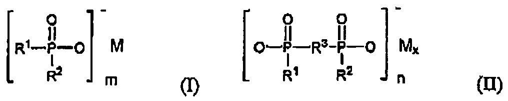 wherein R¹ and R² are each independently hydrogen, a linear or branched C₁-C₆ alkyl radical or an aryl radical; R³ is a linear or branched C₁-C₁₀ alkylene, arylene, alkylarylene, or arylalkylene radical; M is calcium, aluminum, magnesium, strontium, barium, or zinc; m is 2 or 3; n is 1 or 3; and x is 1 or 2; and
ii) at least one nitrogen compound selected from the group consisting of benzoguanine, compounds, terepthalie ester compounds of tris(hydroxyalkyl)isocyanurate, allantoin compounds, glycoluril compounds, melamine cyanurate, melamine phosphate compounds, dimelamine phosphate compounds, melamine pyrophosphate compounds, melem, melarn, and combinations thereof; and
35 to 60 weight percent glass fiber and a non-reinforcing inorganic filler selected from the group consisting of calcinated clay, talc, wollastonite, barium sulfate, mica, barium titanate, salts or esters of orthosilicic acid, silicates, zeolites, silicas, glass powders, glass-ceramic powders, magnesium oxide, magnesium carbonates, zinc oxide, zinc stannate, zinc hydroxystannate, zinc phosphate, zinc borate, zinc sulfide, aluminium phosphate, metal carbonates, and combinations thereof;
wherein the glass fiber is incorporated into the flame retardant composition by a continuous melt pultrusion process so as to give the composition a tensile modulus of at least 11 GPa;
wherein all the amounts are based upon the total weight of the flame-retardant polyamide composition; and
wherein the composition exhibits a rating of V0 according to UL-94 at 1.6 millimeters thickness, and a comparative tracking index measured according to International Electrotechnical Commission standard IEC-60112/3^{rd} of greater than 400 Volts.

10. The composition of claim 1, further comprising a polyarylene ether, in a ratio of less than 2:1 or lower, of polyarylene ether to polyamide.

## Patentansprüche

1. Flammhemmende Polyamidzusammensetzung, umfassend:
30 bis 65 Gew.-% Polyamid;
3 bis 40 Gew.-% eines flammhemmende Systems, umfassend:
i) ein Metallphosphinat- oder diphosphinatsalz; und
ii) mindestens eine Stickstoffverbindung, ausgewählt aus der Gruppe von Benzoguaninverbindungen, Terephthalsäureesterverbindungen des Tris(hydroxyalkyl)isocyanurats, Allantoinverbindungen, Glykolurilverbindungen, Melamincyanurat, Melaminphosphatverbindungen, Dimelaminphosphatverbindungen, Melaminpyrophosphatverbindungen, Melem, Melam und deren Kombinationen; und
35 bis 70 Gew.-% eines verstärkenden Füllstoffs;
wobei alle Mengen auf dem Gesamtgewicht der flammhemmenden Polyamidzusammensetzung basieren;
wobei die Zusammensetzung eine V0-Einstufung gemäß UL-94 bei 1,6 Millimetern Dicke, einen Zugmodul von mindestens 10,5 GPa gemäß ISO Standard 527/1 und eine Kriechstromfestigkeit gemäß dem Standard IEC-60112/3^{rd} der Internationalen Elektrotechnischen Kommission von mehr als 400 Volt aufweist.

2. Zusammensetzung nach Anspruch 1, wobei das Metallphosphinatsalz der Formel (I) und das Metalldiphosphinatsalz der Formel (II) 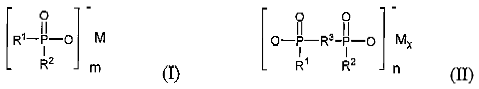 entspricht, wobei R¹ und R², jeweils unabhängig voneinander, Wasserstoff, ein linearer oder verzweigter C₁-C₆-Alkylrest oder ein Arylrest sind; R³ ein linearer oder verzweigter C₁-C₁₀-Alkylen-, -Arylen-, -Alkylarylen- oder -Arylalkylenrest ist; M Calcium, Aluminium, Magnesium, Strontium, Barium oder Zink ist; m 2 oder 3 ist; n 1 oder 3 ist; und x 1 oder 2 ist.

3. Zusammensetzung nach Anspruch 1, wobei die Stickstoffverbindung eine Verbindung der Formeln (III) bis (VIII) oder deren Kombinationen umfasst 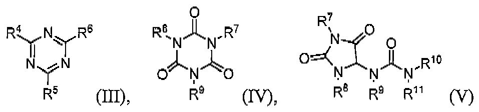 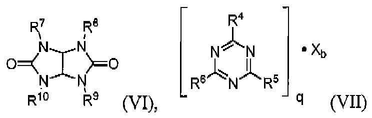 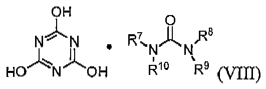 wobei R⁴, R⁵ und R⁶, unabhängig voneinander, Wasserstoff, Hydroxy, Amino, C₁-C₈-Mono- oder -Dialkylaznino; C₁-C₈-Alkyl, C₅-C₁₆-Cycloalkyl oder -Alkylcycloalkyl sind, wobei jeder Rest durch ein Hydroxyl oder ein C₁-C₄-Hydroxyalkyl, C₂-C₈-Alkenyl, C₁-C₈-Alkoxy, -Acyl, -Acyloxy, C₆-C₁₂-Aryl, -OR⁴ und -N(R⁴)R⁵ substituiert sein kann; oder N-alicyclisch oder N-aromatisch sind, wobei N-alicyclisch cyclische stickstoffhaltige Verbindungen wie Pyrrolidin, Piperidin, Imidazolidin oder Piperazin bezeichnet und N-aromatisch stickstoffhaltige heteroaromatische Ringverbindungen wie Pyrrol, Pyridin, Imidazol oder Pyrazin bezeichnet; R⁷, R⁸, R⁹, R¹⁰ und R¹¹, unabhängig voneinander, Wasserstoff, C₁-C₈-Alkyl, C₅-C₁₆-Cycloalkyl oder -Alkylcycloalkyl sind, wobei jeder Rest durch ein Hydroxyl oder ein C₁-C₄-Hydroxyalkyl, C₂-C₈-Alkenyl, C₁-C₈-Alkoxy, -Acyl, -Acyloxy, C₆-C₁₂-Aryl und -OR⁴ substituiert sein kann; X Phosphorsäure oder Pyrophosphorsäure ist; q 1, 2, 3 oder 4 ist; und b 1, 2, 3, oder 4 ist.

4. Zusammensetzung nach Anspruch 1, wobei das Polyamid ausgewählt ist aus der Gruppe von Nylon-6, Nylon-6,6, Nylon-4, Nylon-4,6, Nylon-12, Nylon-6,10, Nylon-6,9, Nylon-6,12, Nylon-9T, Copolymer von Nylon-6,6 und Nylon-6, Polyamidcopolymeren und deren Kombinationen.

5. Zusammensetzung nach Anspruch 1, umfassend einen nicht-verstärkenden anorganischen Füllstoff, wobei das Verhältnis von verstärkendem Füllstoff zu nicht-verstärkendem anorganischem Füllstoff größer als 1 ist und wobei die Gesamtmenge des verstärkenden Füllstoffs und des nicht-verstärkenden Füllstoffs in der Zusammensetzung 35 bis 70 Gew.-% ist.

6. Zusammensetzung nach Anspruch 5, wobei der nicht-verstärkende anorganische Füllstoff ausgewählt ist aus der Gruppe von gebrannter Tonerde, Talkum, Wollastonit, Bariumsulfat, Glimmer, Bariumtitanat, Salzen oder Estern der Orthokieselsäure, Silikaten, Zeolithen, Siliciumdioxiden, Glaspulvern, Glaskeramikpulvern, Magnesiumoxid, Magnisiumcarbonaten, Zinkoxid, Zinkstannat, Zinkhydroxystannat, Zinkphosphat, Zinkborat, Zinksulfid, Aluminiumphosphat, Metallcarbonaten und deren Kombinationen.

7. Zusammensetzung nach Anspruch 1, weiterhin umfassend bis zu 15 Gew.-% eines schlagzähmachenden Additivs.

8. Zusammensetzung nach Anspruch 1, weiterhin umfassend bis zu 20 Gew.-% eines verschleißmindernden Additivs, bezogen auf das Gesamtgewicht der Zusammensetzung, wobei das verschleißmindernde Additiv ausgewählt ist aus der Gruppe von Polytetrafluoroethylen, Molybdändisulfid, Graphit, Aramid, Kohlenstofffaser, Kohlepulver und deren Kombinationen.

9. Flammhemmende Polyamidzusammensetzung, umfassend:
30 bis 65 Gew.-% Nylon-6, Nylon-6,6 oder deren Kombination;
3 bis 40 Gew.-% eines flammhemmende Systems, umfassend:
i) ein Metallphosphinat der Formel (I) oder ein Metalldiphosphinatsalz der Formel (II) 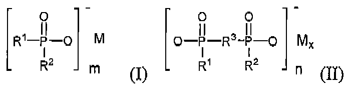 wobei R¹ und R², jeweils unabhängig voneinander, Wasserstoff, ein linearer oder verzweigter C₁-C₆-Alkylrest oder ein -Arylrest sind; R³ ein linearer oder verzweigter C₁-C₁₀-Alkylen-, -Arylen-, -Alkylarylen- oder -Arylalkylenrest ist; M Calcium, Aluminium, Magnesium, Strontium, Barium oder Zink ist; m 2 oder 3 ist; n 1 oder 3 ist; und x 1 oder 2 ist; und
ii) mindestens eine Stickstoffverbindung, ausgewählt aus der Gruppe von Benzoguaninverbindungen, Terephthalsäureesterverbindungen des Tris(hydroxyalkyl)isocyanurats, Allantoinverbindungen, Glykolurilverbindungen, Melamincyanurat, Melaminphosphatverbindungen, Dimelaminphosphatverbindungen, Melaminpyrophosphatverbindungen, Melem, Melam und deren Kombinationen; und
35 bis 60 Gew.-% Glasfaser und eines nicht-verstärkenden anorganischen Füllstoffs, ausgewählt aus der Gruppe von gebrannter Tonerde, Talkum, Wollastonit, Bariumsulfat, Glimmer, Bariumtitanat, Salzen oder Estern der Orthokieselsäure, Silikaten, Zeolithen, Siliciumdioxiden, Glaspulvern, Glaskeramikpulvern, Magnesiumoxid, Magnisiumcarbonaten, Zinkoxid, Zinkstannat, Zinkhydroxystannat, Zinkphosphat, Zinkborat, Zinksulfid, Aluminiumphosphat, Metallcarbonaten und deren Kombinationen;
wobei die Glasfaser durch ein kontinuierliches Schmelzpultrusionsverfahren in die flammhemmende Zusammensetzung eingearbeitet ist derart, dass die Zusammensetzung einen Zugmodul von mindestens 11 GPa aufweist;
wobei alle Mengen auf dem Gesamtgewicht der flammhemmenden Polyamidzusammensetzung basieren; und
wobei die Zusammensetzung eine V0-Einstufung gemäß UL-94 bei 1,6 Millimetern Dicke und eine Kriechstromfestigkeit gemäß dem Standard IEC-60112/3^{rd} der Internationalen Elektrotechnischen Kommission von mehr als 400 Volt aufweist.

10. Zusammensetzung nach Anspruch 1, weiterhin umfassend einen Polyarylenether in einem Verhältnis des Polyarylenethers zu Polyamid von weniger als 2 : 1 oder geringer.

## Revendications

1. Composition de polyamide ignifuge, qui comprend:
30 à 65 % en poids de polyamide;
3 à 40 % en poids d'un système ignifuge qui comprend
i) un sel de phosphinate ou de diphosphinate métallique; et
ii) au moins un composé azoté choisi dans le groupe constitué des composés de benzoguanine, des composés d'ester téréphtalique de tris(hydroxyalkyl)isocyanurate, des composés d'allantoïne, des composés de glycoluril, du cyanurate de mélamine, des composés de phosphate de mélamine, des composés de phosphate de dimélamine, des composés de pyrophosphate de mélamine, du mélème, du mélame, et de leurs combinaisons; et
35 à 70 % en poids d'une charge renforçante;
dans laquelle toutes les quantités sont basées sur le poids total de la composition de polyamide ignifuge;
dans laquelle la composition présente un classement V0 selon la norme UL-94 à une épaisseur de 1,6 millimètres, un module de traction d'au moins 10,5 GPa mesuré selon la norme ISO 527/1, et un indice de cheminement relatif mesuré selon la norme de la Commission Électrotechnique Internationale CEI-60112/3ème édition supérieur à 400 volts.

2. Composition selon la revendication 1, dans laquelle le sel de phosphinate métallique est de formule (I) et le sel de diphosphinate métallique est de formule (II) 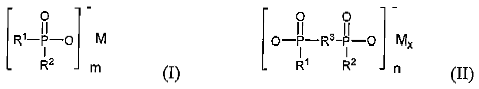 dans lesquelles R¹ et R² sont chacun indépendamment un hydrogène, un radical alkyle en C₁-C₆ linéaire ou ramifié, ou un radical aryle; R³ est un radical alkylène en C₁-C₁₀ linéaire ou ramifié, arylène, alkylarylène, ou arylalkylène; M est le calcium, l'aluminium, le magnésium, le strontium, le baryum, ou le zinc; m vaut 2 ou 3; n vaut 1 ou 3; et x vaut 1 ou 2.

3. Composition selon la revendication 1, dans laquelle le composé azoté comprend un composé répondant aux formule (III) à (VIII) ou à leurs combinaisons 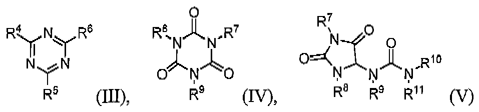 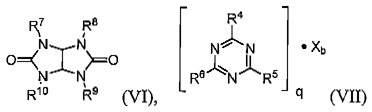 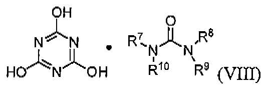 dans lesquelles R⁴, R⁵, et R⁶ sont indépendamment un hydrogène, un radical hydroxy, amino, ou mono- ou di-(alkyl en C₁-C₈)amino; un radical alkyle en C₁-C₈, cycloalkyle en C₅-C₁₆, ou alkylcycloalkyle, chacun pouvant être substitué par un radical hydroxyle ou hydroxyalkyle en C₁-C₄, alcényle en C₂-C₈, alcoxy en C₁-C₈, -acyle, -acyloxy, aryle en C₆-C₁₂, -OR⁴ et -N(R⁴)R⁵; ou sont N-alicycliques ou N-aromatiques, N-alicycliques indiquant des composés contenant un azote cyclique par exemple la pyrrolidine, la pipéridine, l'imidazolidine, ou la pipérazine, et N-aromatiques indiquant des composés cycliques hétéroaromatiques contenant un azote par exemple le pyrrole, la pyridine, l'imidazole, ou la pyrazine; R⁷, R⁸, R⁹, R¹⁰ et R¹¹ sont indépendamment un hydrogène, un radical alkyle en C₁-C₈, cycloalkyle en C₅-C₁₆ ou -alkylcycloalkyle, chacun pouvant être substitué par un radical hydroxyle ou hydxoxyallryle en C₁-C₄, alcényle en C₂-C₈, alcoxy en C₁-C₈, -acyle, -acyloxy, aryle en C₆-C₁₂, et -O-R⁴; X est un acide phosphorique ou pyrophosphorique; q vaut 1, 2, 3, ou 4; et b vaut 1, 2, 3, ou 4.

4. Composition selon la revendication 1, dans laquelle le polyamide est choisi dans le groupe constitué par le nylon-6, le nylon-6,6, le nylon-4, le nylon-4,6, le nylon-12, le nylon-6,10, le nylon-6,9, le nylon-6,12, le nylon-9T, un copolymère de nylon-6,6 et de nylon-6, des copolymères de polyamide, et leurs combinaisons.

5. Composition selon la revendication 1, comprenant une charge inorganique non renforçante, dans laquelle le rapport de la charge renforçante sur la charge inorganique non renforçante est supérieur à 1, et dans laquelle la quantité totale de la charge renforçante et de la charge non renforçante présente dans la composition est de 35 à 70 % en poids.

6. Composition selon la revendication 5, dans laquelle la charge inorganique non renforçante est choisie dans le groupe constitué de l'argile calcinée, du talc, de la wollastonite, du sulfate de baryum, du mica, du titanate de baryum, des sels ou des esters d'acide orthosilicique, des silicates, des zéolites, des silices, des poudres de verre, des poudres vitrocéramiques, de l'oxyde de magnésium, des carbonates de magnésium, de l'oxyde de zinc, du stannate de zinc, de l'hydroxystannate de zinc, du phosphate de zinc, du borate de zinc, du sulfure de zinc, du phosphate d'aluminium, des carbonates de métal, et de leurs combinaisons.

7. Composition selon la revendication 1, qui comprend en outre jusqu'à 15 % en poids d'un modificateur d'impact.

8. Composition selon la revendication 1, qui comprend en outre jusqu'à 20 % en poids d'un additif anti-usure basé sur le poids total de la composition, dans laquelle l'additif anti-usure est choisi dans le groupe constitué du polytétrafluoroéthylène, du disulfure de molybdène, du graphite, de l'aramide, d'une fibre de carbone, d'une poudre de carbone, et de leurs combinaisons.

9. Composition de polyamide ignifuge, qui comprend:
30 à 65 % en poids de nylon-6, de nylon-6,6, ou d'une combinaison de ceux-ci;
3 à 40 % en poids d'un système ignifuge qui comprend
i) un phosphinate métallique de formule (I) ou le sel de diphosphinate métallique de formule (II) 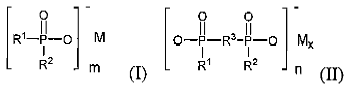 dans lesquelles R¹ et R² sont chacun indépendamment un hydrogène, un radical alkyle en C₁-C₆ linéaire ou ramifié, ou un radical aryle; R³ est un radical alkylène en C₁-C₁₀ linéaire ou ramifié, arylène, alkylarylène, ou arylalkylène; M est le calcium, l'aluminium, le magnésium, le strontium, le baryum, ou le zinc; m vaut 2 ou 3; n vaut 1 ou 3; et x vaut 1 ou 2; et
ii) au moins un composé azoté choisi dans le groupe constitué des composés de benzoguanine, des composés d'ester téréphtalique de tris(hydroxyalkyl)isocyanurate, des composés d'allantoïne, des composés de glycoluril, du cyanurate de mélamine, des composés de phosphate de mélamine, des composés de phosphate de dimélamine, des composés de pyrophosphate de mélamine, du mélème, du mélame, et de leurs combinaisons; et
de 35 à 60 % en poids de fibre de verre et d'une charge inorganique non renforçante choisie dans le groupe constitué de l'argile calcinée, du talc, de la wollastonite, du sulfate de baryum, du mica, du titanate de baryum, des sels ou des esters d'acide orthosilicique, des silicates, des zéolites, des silices, des poudres de verre, des poudres vitrocéramiques, de l'oxyde de magnésium, des hydrotalcites, des carbonates de magnésium, de l'oxyde de zinc, du stannate de zinc, de l'hydroxystannate de zinc, du phosphate de zinc, du borate de zinc, du sulfure de zinc, du phosphate d'aluminium, des carbonates de métal, et de leurs combinaisons;
dans laquelle la fibre de verre est incorporée dans la composition ignifuge par un procédé de pultrusion à chaud afin de donner à la composition un module de traction d'au moins 11 GPa;
dans laquelle toutes les quantités sont basées sur le poids total de la composition de polyamide ignifuge;
dans laquelle la composition présente un classement V0 selon la norme UL-94 à une épaisseur de 1,6 millimètres, et un indice de cheminement relatif mesuré selon la norme de la Commission Électrotechnique Internationale CEI-60112/3ème édition supérieur à 400 volts.

10. Composition selon la revendication 1, comprenant en outre un éther de polyarylène, en un rapport inférieur à 2/1 ou moins, de l'éther de polyarylène sur le polyamide.
